# EUROPEAN PATENT SPECIFICATION

(11) **EP 3 674 820 B1**
(45) Date of publication and mention of the grant of the patent: **16.10.2024**
(21) Application number: 19217267.4
(22) Date of filing: 17.12.2019
(51) Int. Cl.: G05B 15/02, G06F 21/53

(54) **HOUSEHOLD APPLIANCE CONTROL SYSTEM, HOUSEHOLD APPLIANCE, AND HOUSEHOLD APPLIANCE CONTROL METHOD**
STEUERSYSTEM FÜR HAUSHALTSGERÄTE, HAUSHALTSGERÄT UND VERFAHREN ZUR STEUERUNG VON HAUSHALTSGERÄTEN
SYSTÈME DE COMMANDE POUR APPAREIL MÉNAGER, APPAREIL MÉNAGER ET PROCÉDÉ DE COMMANDE D'APPAREIL MÉNAGER

(30) Priority: 26.12.2018 CN 201811601322
(43) Date of publication of application: 01.07.2020
(73) Proprietor: BSH Hausgeräte GmbH, 81739 München (DE)
(72) Inventor: Yang, Jia, Nanjing, 210046 (CN); Chen, Xiaohui, NANJING, 210046 (CN)

(56) References cited:
- WO-A1-2017/009415
- US-A1- 2017 054 571
- TAL GARFINKEL ET AL: "When Virtual is Harder than Real: Security Challenges in Virtual Machine Based Computing Environments", HOTOS'05: PROCEEDINGS OF THE 10TH CONFERENCE ON HOT TOPICS IN OPERATING SYSTEMS - VOLUME 10, 12 June 2005 (2005-06-12), XP055688091

## Description

### BACKGROUND

### Technical Field

The present invention related to the field of intelligent household appliance technologies, and specifically, to a household appliance control system, a household appliance, and a household appliance control method.

### Related Art

With the development of Internet technologies, intelligent household appliances have become a development trend of the current household appliance industry. Various household appliances become more intelligent with the support of the Internet technologies. The household appliances have a network access function, are capable of human-computer interaction, and are further provided with devices such as a camera and a microphone, and therefore can implement functions that cannot be implemented by a conventional household appliance.

When bringing convenience to people, the intelligent household appliances also have increasingly more side effects, among which the security problem of the intelligent household appliances should not be neglected. If the intelligent household appliances are controlled by a hacker, an inestimable loss may be caused to privacy information or even personal safety of a user.

Therefore, a new household appliance control system is needed, to improve the security of the household appliances.

US 2017/054571 A1 concerns an integrated cloud system for premises automation. A gateway is configured to detect attempts to activate gateway-enabled devices by brute force.

WO 2017/009415 A1 concerns a computer security system comprising two guest virtual machines of equal rank, which guest virtual machines use a same hypervisor.

### SUMMARY

The invention is defined by independent apparatus claim 1 and independent method claim 10. Optional aspects of the invention are defined in the dependent claims.

An embodiment of the present invention provides a household appliance control system including: a first operating system, configured to generate a function control signal and transmit the function control signal to a second operating system; the second operating system, configured to drive, according to the function control signal, a function module of a household appliance to perform a corresponding operation; and a security interface. The security interface is configured to perform security verification on the function control signal generated by the first operating system, and transmit the function control signal to the second operating system if the function control signal passes the verification.

Compared with the prior art, an advantage of this embodiment of the present invention lies in that: two operating systems are set in the household appliance control system to respectively implement basic functions and intelligent functions of the household appliance, thereby implementing logical isolation between the two operating systems, and achieving an objective of reducing a security risk. Further, the security interface is set in the household appliance control system. The security interface performs security verification on the function control signal generated by the first operating system, and transmits the function control signal to the second operating system if the function control signal passes the verification. Therefore, the security of the household appliance control system is improved.

Optionally, if the function control signal does not pass the security verification, the function control signal is not allowed to be transmitted to the second operating system. In this way, even if the first operating system is controlled by a hacker, the security interface is capable of intercepting an attack from the first operating system by using a security verification mechanism. Therefore, the second operating system can be protected from being intruded, thereby improving the security of the household appliance control system.

Optionally, the security interface is set in a virtual machine monitor. The virtual machine monitor is configured to logically isolate the first operating system from the second operating system. In this way, the first operating system and the second operating system are logically isolated, so that the security of the household appliance is improved.

Optionally, the first operating system, the second operating system, and the virtual machine monitor are integrated on a system master module of the household appliance. Compared with an existing hardware isolation solution, in this solution, hardware costs and design complexity of the household appliance control system can be reduced.

Optionally, the function control signal includes an operational data obtaining signal which is used for obtaining operational data of the function module. In this way, the operational data of the household appliance can be obtained, thereby facilitating a manufacturer to implement an improved design, so that use satisfaction of a user is improved.

Optionally, the first operating system communicates with a cloud, and is configured to send the operational data to the cloud. The obtained operational data is uploaded to the cloud, so that a developer can conveniently obtain related data.

Optionally, the function control signal is generated according to user input or a cloud instruction.

Optionally, the first operating system is an Android system. The Android system with an open platform is used, to facilitate installing more application programs related to the household appliance, thereby improving use experience of the user.

Optionally, the second operating system is a Linux system. Due to features of Linux, such as a low price, high customizability and good compatibility, costs can be saved and the user experience can be improved.

An embodiment of the present invention further provides a household appliance, including a function module and the household appliance control system. The household appliance control system includes: a first operating system, configured to generate a function control signal and transmit the function control signal to a second operating system; the second operating system, configured to drive, according to the function control signal, the function module of the household appliance to perform a corresponding operation; and a security interface. The security interface is configured to perform security verification on the function control signal generated by the first operating system, and transmit the function control signal to the second operating system if the function control signal passes the verification.

Compared with an existing household appliance, an advantage of this embodiment of the present invention lies in that: in the household appliance control system, two operating systems are isolated in terms of system logic, thereby achieving an objective of reducing a security risk. Further, by setting the security interface, security verification is performed on the function control signal generated by the first operating system, and the function control signal that passes security verification is transmitted to the second operating system. Therefore, the security of the household appliance control system is improved.

An embodiment of the present invention further provides a household appliance control method, including: generating, by a first operating system, a function control signal, and transmitting the function control signal to a second operating system; determining, by a security interface, whether the function control signal passes security verification; and transmitting the function control signal to the second operating system if the function control signal passes the security verification; or skipping transmitting the function control signal to the second operating system if the function control signal does not pass the security verification.

Compared with an existing method, an advantage of this embodiment of the present invention lies in that: the security verification is performed when the function control signal is transmitted to the second operating system, thereby improving the security of the household appliance control system.

### BRIEF DESCRIPTION OF THE DRAWINGS

FIG. 1 is a schematic structural diagram of a household appliance control system according to an embodiment of the present invention;
FIG. 2 is a schematic structural diagram of a household appliance according to an embodiment of the present invention; and

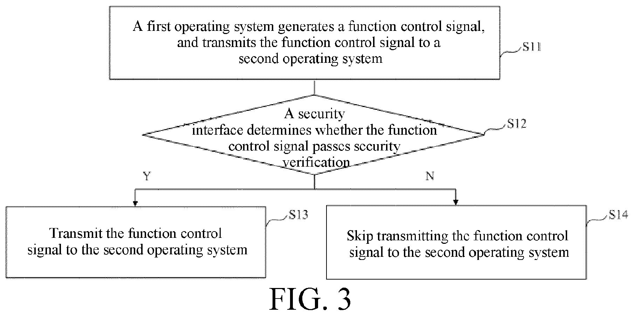

FIG. 3 is a schematic flowchart of a household appliance control method according to an embodiment of the present invention.

### DETAILED DESCRIPTION

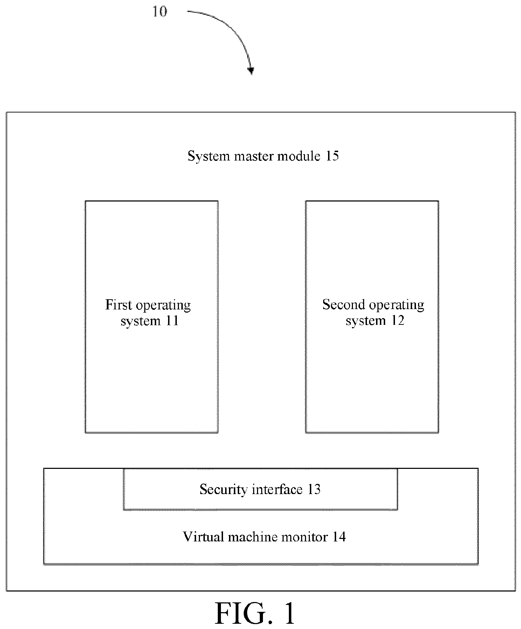

FIG. 1 is a schematic structural diagram of a household appliance control system according to an embodiment of the present invention.

A solution of this embodiment is applicable to a control scenario of an intelligent household appliance with a communication function, such as a washing machine, a refrigerator, an air conditioner, a microwave oven, a television, or a cooker hood. FIG. 1 is presented with an example in which the household appliance is an intelligent refrigerator.

In some embodiments, the intelligent refrigerator includes at least one function module. The function module (also referred to as a working module) may be configured to control the household appliance to operate in a corresponding operation state. Using the refrigerator as an example, the function modules may include: a compressor, a condenser, a refrigerator door, a human-computer interaction interface microphone array, a projector, an application program, and the like.

Specifically, referring to FIG. 1, a household appliance control system 10 may include: a first operating system 11, a second operating system 12, and a security interface 13.

In some embodiments, the first operating system 11 is configured to generate a function control signal, and transmit the function control signal to the second operating system 12. Specifically, the first operating system 11 may generate a corresponding function control signal according to user input or a cloud instruction or by other means.

In some embodiments, the intelligent refrigerator is provided with a human-computer interaction interface. A user may input a temperature parameter of the refrigerator on the human-computer interaction interface. The first operating system 11 generates a corresponding function control signal according to the input temperature parameter. In some embodiments, the first operating system 11 may also receive a temperature parameter sent by a cloud, and generate a corresponding function control signal according to the received temperature parameter. In some embodiments, a user may further send a temperature parameter to the intelligent refrigerator by using an intelligent terminal. The first operating system 11 generates a corresponding function control signal according to the received temperature parameter.

In some embodiments, the second operating system 12 is configured to drive, according to the function control signal, the function module of the household appliance to perform a corresponding operation. For example, after receiving a function control signal including a temperature parameter, the second operating system 12 drives a corresponding function module (for example, the compressor), thereby adjusting a temperature inside the refrigerator.

In some embodiments, the security interface 13 is configured to perform security verification on the function control signal generated by the first operating system 11, and transmit the function control signal to the second operating system 12 if the function control signal passes the verification. The security interface 13 may perform security verification on the function control signal by means of key verification, data signature verification, and the like.

The first operating system 11 and the second operating system 12 are set to respectively implement basic functions and intelligent functions of the household appliance, thereby implementing logical isolation between the two operating systems, and achieving an objective of reducing a security risk. Further, by setting the security interface 13, security verification is performed on the function control signal generated by the first operating system 11. Therefore, the security of the household appliance control system 10 is improved.

In some embodiments, the first operating system 11 is responsible for the intelligent functions of the intelligent refrigerator. Specifically, the first operating system 11 focuses on supporting a multimedia function of the intelligent refrigerator and interaction with the cloud. The multimedia function includes: voice interaction, video processing, audio processing, and the like.

For example, the intelligent refrigerator is provided with the human-computer interaction interface. The user may input a control instruction by using voice, for example, "setting the temperature of the refrigerating chamber to 5°C." The first operating system 11 may perform voice identification on the control instruction, and generate a corresponding function control signal, thereby adjusting the temperature of the refrigerating chamber.

In some embodiments, the first operating system 11 further supports the intelligent refrigerator to interact with the cloud, and may receive a control instruction from the cloud.

In some embodiments, the second operating system 12 is responsible for the basic functions of the intelligent refrigerator, such as status monitoring, firmware upgrade, or data collection.

In some embodiments, if the function control signal does not pass the security verification, the function control signal is not allowed to be transmitted to the second operating system 12. Through the setting, even if the first operating system 11 is controlled by a hacker, the security interface 13 is capable of intercepting an attack from the first operating system 11 by using a security verification mechanism thereof, so as to protect the second operating system 12 from being intruded, thereby improving the security of the household appliance control system 10.

In some embodiments, the security interface 13 is set in a virtual machine monitor 14 (VMM, also referred to as Hypervisor). The virtual machine monitor 14 is configured to logically isolate the first operating system 11 from the second operating system 12.

The virtual machine monitor 14 is an intermediate software layer running between a physical server and an operating system, and may allow a plurality of operating systems and applications to share a set of basic physical hardware. Therefore, the virtual machine monitor 14 may also be regarded as a meta-operating system in a virtual environment, and is capable of coordinating all physical devices and virtual machines on an access server. When the server starts the virtual machine monitor 14, the server allocates an appropriate amount of memory, a central processing unit, a network, and a magnetic disk to each virtual machine, and loads client operating systems of all the virtual machines. In this embodiment, the first operating system 11 and the second operating system 12 may control the function modules of the intelligent refrigerator by using the virtual machine monitor 14.

By setting the virtual machine monitor 14, logical isolation between the first operating system 11 and the second operating system 12 is implemented, thereby improving the security of the intelligent refrigerator. Further, a plurality of operating systems shares a set of basic physical hardware, so that hardware resources of the intelligent refrigerator can be efficiently and fully used, thereby improving use efficiency of the hardware.

In some embodiments, the first operating system 11, the second operating system 12, and the virtual machine monitor 14 are integrated on a system master module 15 of the household appliance. The system master module 15 may be a main control board of the intelligent refrigerator. In an existing technical solution, corresponding operating systems are respectively installed on two pieces of hardware to implement isolation. However, in the solution provided by this embodiment of the present invention, the two operating systems are integrated on one piece of hardware, thereby reducing hardware costs and design complexity of the household appliance control system 10.

In some embodiments, the function control signal includes an operational data obtaining signal. The operational data obtaining signal is used for obtaining operational data of the function module. After receiving the operational data obtaining signal, the second operating system 12 may obtain operational data of each function module by many means. For example, a pressure sensor disposed on the refrigerator is controlled to obtain door opening/closing data. For another example, an application program installed on the intelligent refrigerator is controlled to report use frequency of the application program.

In some embodiments, the first operating system 11 communicates with the cloud, and is configured to send the operational data to the cloud.

In this way, a developer may obtain operational data of the household appliance, thereby facilitating a manufacturer to implement a targeted improved design, so that use satisfaction of the user is improved.

In some embodiments, the first operating system 11 is an Android system. The Android system has a highly open platform, and there are many developers of related application programs, so that more application programs related to the household appliance can be installed on the intelligent household appliance, thereby improving use experience of the user. In addition, the Android is more applicable to a multimedia scenario.

The second operating system 12 is a Linux system. Due to features of Linux, such as a low price, high customizability and good compatibility, costs can be reduced and the user experience can be improved. The Linux has higher security, and is applicable to implement a conventional function of the household appliance.

In some embodiments, that the intelligent refrigerator sends the obtained operational data to the cloud includes: transmitting the operational data to a home router in a wireless communications manner; and sending the operational data to the cloud by using the home router.

In some embodiments, the wireless communications manner may be wireless-fidelity (WiFi).

An embodiment of the present invention further provides a household appliance 20, including: a functional unit (21-2N). The quantity of the functional unit is at least one. The household appliance 20 further includes the household appliance control system 10. In some embodiments, the household appliance control system 10 is configured to drive the function module (21-2N) of the household appliance 20 to perform a corresponding operation.

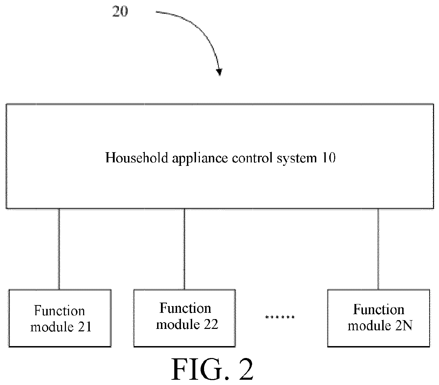

With reference to FIG. 1 and FIG. 2, the household appliance control system 10 includes: a first operating system 11, configured to generate a function control signal and transmit the function control signal to a second operating system 12; the second operating system 12, configured to drive, according to the function control signal, the function module (21-2N) of the household appliance to perform a corresponding operation; and a security interface 13, configured to perform security verification on the function control signal generated by the first operating system 11, and transmit the function control signal to the second operating system 12 if the function control signal passes the verification.

For more details related to the household appliance 20, refer to related descriptions of the household appliance control system 10. Details are not described herein again.

An embodiment of the present invention further provides a household appliance control method.

In S11, a first operating system generates a function control signal, and transmits the function control signal to a second operating system.

In S12, a security interface determines whether the function control signal passes security verification.

If the function control signal passes the security verification, in S13, the function control signal is transmitted to the second operating system.

If the function control signal does not pass the security verification, in S13, the function control signal is not transmitted to the second operating system.

For more details related to the household appliance control method, refer to related descriptions of the household appliance control system 10. Details are not described herein again.

Although the present invention is disclosed above, the present invention is not limited thereto. Any person skilled in the art may make various variations and modifications subject to the scope limited by the appended claims.

## Claims

1. A household appliance control system device (10) having a system master module (15) comprising:
a first operating system (11), configured to generate a function control signal according to a user input or a cloud instruction and to transmit the function control signal to a second operating system (12);
a second operating system (12), configured to drive, according to the function control signal, at least one function module (21; 22; ... ; 2N) of a household appliance to perform a corresponding operation; and
a security interface (13), configured to perform security verification on the function control signal generated by the first operating system (11), and transmit the function control signal to the second operating system (12) if the function control signal passes the verification;
**characterized in that**
the security interface (13) is set in a virtual machine monitor (14), and the virtual machine monitor (14) is configured to logically isolate the first operating system (11) from the second operating system (12).

2. The household appliance control system device (10) according to claim 1, **characterized in that**, if the function control signal does not pass the security verification, the function control signal is not allowed to be transmitted to the second operating system (12).

3. The household appliance control system device (10) according to claim 1 or 2, **characterized in that** the first operating system (11), the second operating system (12), and the virtual machine monitor (14) are integrated on a system master module of the household appliance.

4. The household appliance control system device (10) according to any of the preceding claims, **characterized in that** the function control signal comprises an operational data obtaining signal that is configured to obtain operational data of the corresponding function module (21; 22; ...; 2N).

5. The household appliance control system device (10) according to any of the preceding claims, **characterized in that** the first operating system (11) communicates with a cloud, and is configured to send the operational data to the cloud.

6. The household appliance control system device (10) according to any of the preceding claims, **characterized in that** the function control signal is generated according to user input or a cloud instruction.

7. The household appliance control system device (10) according to any of the preceding claims, **characterized in that** the first operating system (11) is an Android system.

8. The household appliance control system device (10) according to any of the preceding claims, **characterized in that** the second operating system (12) is a Linux system.

9. A household appliance, comprising:
- a household appliance control system device (10) according to one of the preceding claims; and
- at least one function module (21; 22; ...; 2N).

10. A household appliance control method, comprising;
- generating, by a first operating system (11), a function control signal according to a user input or a cloud instruction, and transmitting the function control signal to a second operating system (12);
- determining, by a security interface (13), whether the function control signal passes security verification; and
- transmitting the function control signal to the second operating system (12) if the function control signal passes the security verification; or
- skipping transmitting the function control signal to the second operating system (12) if the function control signal does not pass the security verification,
wherein the security interface (13) is set in a virtual machine monitor (14), and the virtual machine monitor (14) is configured to logically isolate the first operating system (11) from the second operating system (12).

## Patentansprüche

1. Steuersystemvorrichtung (10) für ein Haushaltsgerät mit einem System-Mastermodul (15), die Folgendes umfasst:
ein erstes Betriebssystem (11), das so konfiguriert ist, dass es einer Benutzereingabe oder
einer Cloud-Anweisung entsprechend ein Funktionssteuersignal erzeugt und das Funktionssteuersignal zu einem zweiten Betriebssystem (12) überträgt,
ein zweites Betriebssystem (12), das so konfiguriert ist, dass es dem Funktionssteuersignal entsprechend bewirkt, dass mindestens ein Funktionsmodul (21; 22; ...; 2N) eines Haushaltsgeräts eine entsprechende Operation durchführt, und
eine Sicherheitsschnittstelle (13), die so konfiguriert ist, dass sie eine Sicherheitsüberprüfung an dem von dem ersten Betriebssystem (11) erzeugten Funktionssteuersignal durchführt und das Funktionssteuersignal zum zweiten Betriebssystem (12) überträgt, wenn es die Überprüfung besteht,
**dadurch gekennzeichnet, dass**
die Sicherheitsschnittstelle (13) in einem Hypervisor (14) angesiedelt und der Hypervisor (14) so konfiguriert ist, dass er das erste Betriebssystem (11) von dem zweiten Betriebssystem (12) logisch trennt.

2. Steuersystemvorrichtung (10) für ein Haushaltsgerät nach Anspruch 1, **dadurch gekennzeichnet, dass** das Funktionssteuersignal, wenn es die Sicherheitsüberprüfung nicht besteht, nicht zu dem zweiten Betriebssystem (12) übertragen werden darf.

3. Steuersystemvorrichtung (10) für ein Haushaltsgerät nach Anspruch 1 oder 2, **dadurch gekennzeichnet, dass** das erste Betriebssystem (11), das zweite Betriebssystem (12) und der Hypervisor (14) in ein System-Mastermodul des Haushaltsgeräts integriert sind.

4. Steuersystemvorrichtung (10) für ein Haushaltsgerät nach einem der vorhergehenden Ansprüche, **dadurch gekennzeichnet, dass** das Funktionssteuersignal ein Betriebsdatenabrufsignal umfasst, das so konfiguriert ist, dass es Betriebsdaten des entsprechenden Funktionsmoduls (21; 22; ...; 2N) abruft.

5. Steuersystemvorrichtung (10) für ein Haushaltsgerät nach einem der vorhergehenden Ansprüche, **dadurch gekennzeichnet, dass** das erste Betriebssystem (11) mit einer Cloud kommuniziert und so konfiguriert ist, dass es die Betriebsdaten zur Cloud sendet.

6. Steuersystemvorrichtung (10) für ein Haushaltsgerät nach einem der vorhergehenden Ansprüche, **dadurch gekennzeichnet, dass** das Funktionssteuersignal der Benutzereingabe oder einer Cloud-Anweisung entsprechend erzeugt wird.

7. Steuersystemvorrichtung (10) für ein Haushaltsgerät nach einem der vorhergehenden Ansprüche, **dadurch gekennzeichnet, dass** es sich bei dem ersten Betriebssystem (11) um ein Android-System handelt.

8. Steuersystemvorrichtung (10) für ein Haushaltsgerät nach einem der vorhergehenden Ansprüche, **dadurch gekennzeichnet, dass** es sich bei dem zweiten Betriebssystem (12) um ein Linux-System handelt.

9. Haushaltsgerät, das Folgendes umfasst:
- eine Steuersystemvorrichtung (10) für ein Haushaltsgerät nach einem der vorhergehenden Ansprüche, und
- mindestens ein Funktionsmodul (21; 22; ...; 2N).

10. Steuerverfahren für ein Haushaltsgerät, das Folgendes umfasst:
- Erzeugen eines Funktionssteuersignals entsprechend einer Benutzereingabe oder einer Cloud-Anweisung und Übertragen des Funktionssteuersignals zu einem zweiten Betriebssystem (12) durch ein erstes Betriebssystem (11),
- Ermitteln über eine Sicherheitsschnittstelle (13), ob das Funktionssteuersignal die Sicherheitsprüfung besteht, und
- Übertragen des Funktionssteuersignals zum zweiten Betriebssystem (12), wenn es die Sicherheitsprüfung besteht, oder
- Überspringen des Übertragens des Funktionssteuersignals zum zweiten Betriebssystem (12), wenn es die Sicherheitsprüfung nicht besteht,
wobei die Sicherheitsschnittstelle (13) in einem Hypervisor (14) angesiedelt und der Hypervisor (14) so konfiguriert ist, dass er das erste Betriebssystem (11) von dem zweiten Betriebssystem (12) logisch trennt.

## Revendications

1. Dispositif de système de commande d'appareil ménager (10) comprenant un module maître de système (15) comprenant :
un premier système d'exploitation (11) configuré pour générer un signal de commande de fonction selon une entrée d'utilisateur ou une instruction de cloud et pour transmettre le signal de commande de fonction à un deuxième système d'exploitation (12),
un deuxième système d'exploitation (12), configuré pour commander, selon le signal de commande de fonction, au moins un module fonctionnel (21, 22,.., 2N) d'un appareil ménager afin d'exécuter une opération correspondante, et
une interface de sécurité (13), configurée pour exécuter une vérification de sécurité sur le signal de commande de fonction généré par le premier système d'exploitation (11), et pour transmettre le signal de commande de fonction au deuxième système d'exploitation (12) si le signal de commande de fonction satisfait à la vérification,
**caractérisé en ce que**
l'interface de sécurité (13) est installée dans un moniteur de machine virtuelle (14), et le moniteur de machine virtuelle (14) est configuré pour isoler logiquement le premier système d'exploitation (11) du deuxième système d'exploitation (12).

2. Dispositif de système de commande d'appareil ménager (10) selon la revendication 1, **caractérisé en ce que**, si le signal de commande de fonction ne satisfait pas à la vérification de sécurité, le signal de commande de fonction n'est pas autorisé à être transmis au deuxième système d'exploitation (12).

3. Dispositif de système de commande d'appareil ménager (10) selon la revendication 1 ou 2, **caractérisé en ce que** le premier système d'exploitation (11), le deuxième système d'exploitation (12) et le moniteur de machine virtuelle (14) sont intégrés dans un module maître de système de l'appareil ménager.

4. Dispositif de système de commande d'appareil ménager (10) selon l'une quelconque des revendications précédentes, **caractérisé en ce que** le signal de commande de fonction comprend un signal d'obtention de données opérationnelles qui est configuré pour obtenir des données opérationnelles du module fonctionnel correspondant (21, 22,... , 2N).

5. Dispositif de système de commande d'appareil ménager (10) selon l'une quelconque des revendications précédentes, **caractérisé en ce que** le premier système d'exploitation (11) communique avec un cloud, et est configuré pour envoyer les données opérationnelles au cloud.

6. Dispositif de système de commande d'appareil ménager (10) selon l'une quelconque des revendications précédentes, **caractérisé en ce que** le signal de commande de fonction est généré selon une entrée d'utilisateur ou une instruction de cloud.

7. Dispositif de système de commande d'appareil ménager (10) selon l'une quelconque des revendications précédentes, **caractérisé en ce que** le premier système d'exploitation (11) est un système Android.

8. Dispositif de système de commande d'appareil ménager (10) selon l'une quelconque des revendications précédentes, **caractérisé en ce que** le deuxième système d'exploitation (12) est un système Linux.

9. Appareil ménager, comprenant :
- un dispositif de système de commande d'appareil ménager (10) selon l'une quelconque des revendications précédentes, et
- au moins un module fonctionnel (21, 22, ...., 2N).

10. Procédé de commande d'appareil ménager, comprenant :
- la génération, par un premier système d'exploitation (11), d'un signal de commande de fonction selon une entrée d'utilisateur ou une instruction de cloud, et la transmission du signal de commande de fonction à un deuxième système d'exploitation (12),
- la détermination, par une interface de sécurité (13), si le signal de commande de fonction satisfait à une vérification de sécurité, et
- la transmission du signal de commande de fonction au deuxième système d'exploitation (12) si le signal de commande de fonction satisfait à la vérification de sécurité, ou
- l'omission de la transmission du signal de commande de fonction au deuxième système d'exploitation (12) si le signal de commande de fonction ne satisfait pas à la vérification de sécurité,
dans lequel l'interface de sécurité (13) est installée dans un moniteur de machine virtuelle (14), et le moniteur de machine virtuelle (14) est configuré pour isoler logiquement le premier système d'exploitation (11) du deuxième système d'exploitation (12).
